# EUROPÄISCHE PATENTANMELDUNG

(11) **EP 2 005 832 A1**
(43) Veröffentlichungstag der Anmeldung: **24.12.2008**
(21) Anmeldenummer: 07110855.9
(22) Anmeldetag: 22.06.2007
(51) Int. Cl.: A23C 3/00, A23C 3/08, A23L 2/44, A23L 3/3472, C12C 5/02

(54) **Stabilisierung von lichtsensitiven Getränken**

(71) Anmelder: Döhler GmbH, 64295 Darmstadt (DE)
(72) Erfinder: Tretzel, Joachim, 64342 Seeheim-Jugenheim (DE); Wydra, Markus, 64673 Zwingenberg (DE); Schmidt, Marco, 64665 Alsbach-Hähnlein (DE)
(74) Vertreter: von Kreisler Selting Werner

(57) **Zusammenfassung**

Verwendung von Grünteezubereitungen zum Schutz von Nahrungsmitteln vor lichtbedingten, photooxidativen oder oxidativen Geschmacksfehlnoten, Geruchsfehlern und/oder Farbfehlern.

## Beschreibung

Die vorliegende Erfindung betrifft Nahrungsmittel, die vor Geruchs-, Geschmacks- oder Farbfehlern geschützt werden müssen.

Einige Nahrungsmittel neigen bereits nach relativ kurzer Lichtexposition - beispielsweise durch Sonnen- oder Tageslicht oder durch Beleuchtung im Regal oder in der Kühltheke - zur Ausbildung von Farbfehlern, Geruchsfehlern und vor allem auch Geschmacksfehlern. Diese Geschmacksfehler werden z.B. beschrieben als Geschmack von nassem Karton bzw. verbrannten Federn.

Hiervon besonders betroffen sind insbesondere protein- und fetthaltige Nahrungsmittel, beispielsweise milchhaltige Produkte. Es wird in der Literatur davon ausgegangen, dass bei milchhaltigen Produkten das milcheigene Riboflavin als Sensibilisator wirkt, was durch Lichteinwirkung zur Bildung von Singulett-Sauerstoff führt.

Neben der Oxidation von ungesättigten Fettsäuren reagiert der Singulett-Sauerstoff vor allem auch mit Methionin-Resten des Milcheiweißes, so dass es zur Bildung von schwefelhaltigen, sensorisch auffälligen Spezies wie Dimethyldisulfid und Dimethyltrisulfid kommt. Auch die Fettoxidationsprodukte, beispielsweise Hexanal und Heptanal können zur Geruchs- oder Geschmacksbeeinträchtigung beitragen.

Üblicherweise wird bei solchen Lebensmitteln versucht, sie weitestgehend vor Licht zu schützen, beispielsweise durch die Verwendung von gefärbten oder beschichteten Verpackungsmaterialien.

WO 2005/058052 betrifft Milchprodukte, die als Stabilisator eine Mischung von Metallsalzen und einer zweiten Komponenten, beispielsweise Ascorbinsäure enthalten.

Aufgabe der vorliegenden Erfindung war es, weitere, möglichst bessere Möglichkeiten zu entwickeln, um Lebensmittel vor entsprechenden Fehlnoten zu schützen.

Eine weitere Aufgabe war es, möglichst natürliche, bestenfalls lebensmitteleigene Inhaltsstoffe bzw. Lebensmittel zu verwenden, die den schützenden Effekt ausüben.

Überraschenderweise kann die Aufgabe gelöst werden durch die Verwendung von Grünteezubereitungen zum Schutz von Nahrungsmitteln vor lichtbedingten, photooxidativen oder oxidativen Geschmacksfehlnoten, Geruchsfehlern und/oder Farbfehlern.

Grundsätzlich können alle Nahrungsmittel eingesetzt werden, die einen typischen Lichtgeschmack/Fehlaroma bei Lichtbelastung ausbilden oder unter Lichtbelastung Farbfehler aufweisen.

Nahrungsmittel, bei denen dieses auftritt, sind beispielsweise milchbasierte Lebensmittel und bier- und malzbasierte Getränke.

Die Fehler treten insbesondere bei Produkten auf, die flüssig oder zumindest ansatzweise fließfähig bzw. streichfähig sind. Bei festen Produkten treten entsprechende Probleme seltener auf, da alle Effekte nur in der äußersten Randschicht ablaufen. Die dann gebildeten Mengen an Geschmacksstoffen sind häufig nicht relevant wahrnehmbar.

Neben flüssigen trinkbaren Produkten können aber auch löffelbare oder streichfähige Produkte für den Schutz vor entsprechenden Fehlnoten relevant sein.

Typische Produkte, die erfindungsgemäß vor Geruchs-, Geschmacks- und Farbfehlern geschützt werden können sind Milchgetränke, Joghurts, Quarks, milcherzeugnishaltige Brotaufstriche, Joghurt- oder Quarkgetränke, Buttermilch und Buttermilchgetränke, Süß- bzw. Sauermolkegetränke, Getränke mit Milch- bzw. Molkeprotein oder Getränke mit Molkenpermeat oder Milchserum sowie milchpulverbasierte Getränke.

Als Grüntee-Zubereitung eignet sich beispielweise ein Grünteeextrakt, ein Grünteearomaextrakt oder ein Grünteepolyphenolpräparat. Solche Produkte sind kommerziell erhältlich. Typischerweise wird als Menge an Grünteezubereitung (bezogen auf das Trockengewicht der Grünteezubereitung) eine Menge von 0,1 bis 5 g/L des Lebensmittels eingesetzt.

In einer Ausführungsform werden zusätzlich ein oder mehrere weitere Stoffe wie beispielsweise Tocopherole, Ascorbinsäure, Polyphenole und Pflanzenextrakte zugesetzt, um die Wirkung zu unterstützen.

Geeignete Pflanzenextrakte sind beispielsweise Rosmarinextrakte oder daraus hergestellte Isolate.

Prinzipiell kann die Grünteezubereitung direkt in ein Fertiggetränk oder in ein Fertigprodukt gebracht werden. Alternativ ist es auch möglich, den Grünteeextrakt über eine Vorstufe, beispielsweise ein Getränkegrundstoff oder eine Fruchtzubereitung zuzuführen. Für ein milchhaltiges Produkt wäre es auch möglich, die Grünteezubereitung der Milch zuzuführen, um dann zu einem milchbasierten Produkt, beispielsweise einem Joghurt zu gelangen.

Gegenstand der Erfindung ist weiterhin ein milchhaltiges Produkt, das eine Grünteezubereitung enthält. Dabei kann es sich unter anderem um ein Milchgetränk, einen Joghurt, einen Quark, eine Schmierkäse, ein Joghurt- oder Quarkgetränk, Buttermilch und Buttermilchgetränke, Süß- bzw. Sauermolkegetränke, Getränke mit Milch- bzw. Molkeprotein oder Getränke mit Molkenpermeat oder Milchserum sowie milchpulverbasierte Getränke handeln.

Ein weiterer Gegenstand ist ein bier- oder malzbasiertes Getränk enthaltend mindestens eine Grünteezubereitung.

Sowohl für das milchhaltige Produkt als auch für das bier- oder malzbasierte Getränk trägt der bevorzugte Gehalt an Grünteezubereitung 0,1 bis 5 g/L.

Überraschenderweise zeigt sich, dass durch den Zusatz der Grünteezubereitung die Bildung von Geschmacksfehlnoten, Geruchsfehlnoten oder Farbfehlern verhindert oder zumindest stark verzögert werden kann.

Die Erfindung wird durch die nachfolgenden Beispiele näher erläutert:

### Beispiel 1

Zu einer mittels Pektin stabilisierten und mit Milchsäure auf pH = 3,9 gesäuerten Milch wurden 50 mg eines Epigallocatechingallat (EGCG) - Präparats mit einer minimalen Reinheit von 92% (w/w) gegeben. EGCG ist ein Grünteepolyphenolpräparat; ca. 30% der Trockenmasse eines Grünteeextraktes bilden die Gruppe der EGCG. Nach Abfüllung dieser Milch in PET-Monolayerflaschen (Hotfill) wurden diese und weitere Varianten (Referenz ohne Zusatz, weitere Zusatzvarianten wie z.B. Addition von Rosmarinextrakt) in einer Kühltheke mit Beleuchtung eingelagert.

Verkostungen nach 1, 2 und 3 Wochen Lagerung zeigten, dass die EGCGversetzte Variante jeweils am besten abschnitt und es lediglich zu einer ganz schwachen Ausbildung des Lichtgeschmacks kam.

Deutlich schlechter schnitten dagegen die anderen im Test befindlichen Varianten ab.

Eine Wiederholung dieses Versuches zeigte, dass die Verwendung eines Grünteeextraktes in einer Dosage von 50 mg/L zu vergleichbar guten Ergebnissen wie im Falle der EGCG-Zugabe führt. Dieser Grünteeextrakt enthielt ca. 13% Polyphenole (als Mischung der üblicherweise im Grüntee gefundenen Polyphenole).

### Beispiel 2

Zunächst wurde eine Mischung eines Grüntee-Extraktes mit einer Tocopherol-Emulsion hergestellt. Über diese Mischung werden 18 mg gemischte Tocopherole und 70 mg eines Grünteearomaextraktes (mit ca. 9% Polyphenolgehalt) je Liter Fertiggetränk appliziert. Anschließend wurde ultrahocherhitzte Milch mit einem Fettanteil von 1,5% heiß in PET-Flaschen abgefüllt, und zwar mit und ohne Zugabe der oben genannten Mischung. Die PET-Flaschen wurden in einem gekühlten Schrank bei 6°C gelagert. Ein Teil der Proben wurde unter Lichtausschluss gelagert und ein Teil der Proben unter Beleuchtung mit einer Fluoreszenzleuchte. Die Lagerung erfolgte für zwei bzw. vier Wochen.

Anschließend wurden die Gehalte an Dimethyldisulfid (DMDS), Dimethyltrisulfid (DMTS) und Hexanal analytisch bestimmt. Sie werden als Abbauprodukte angesehen.

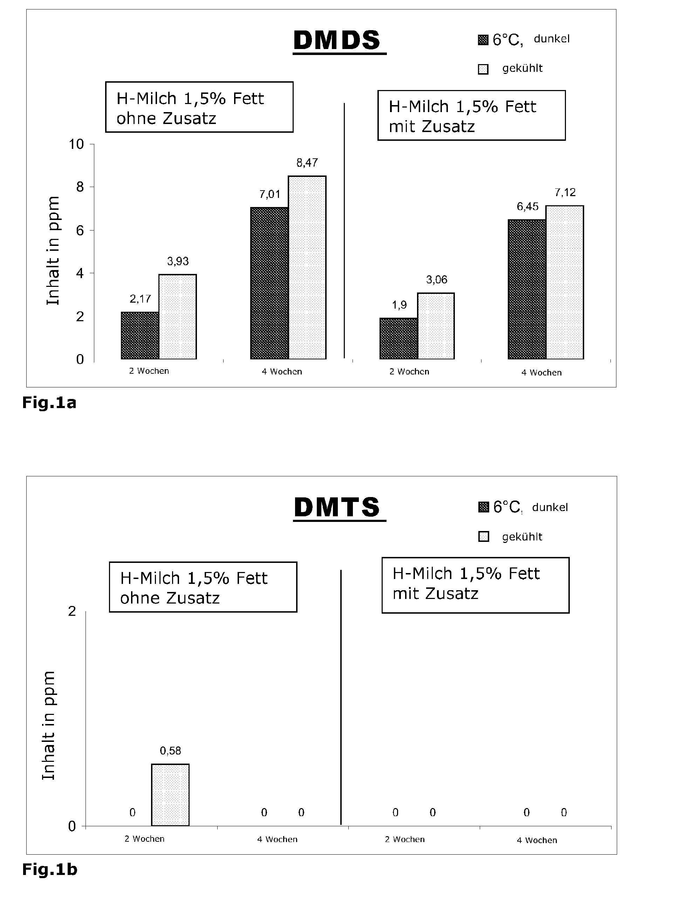

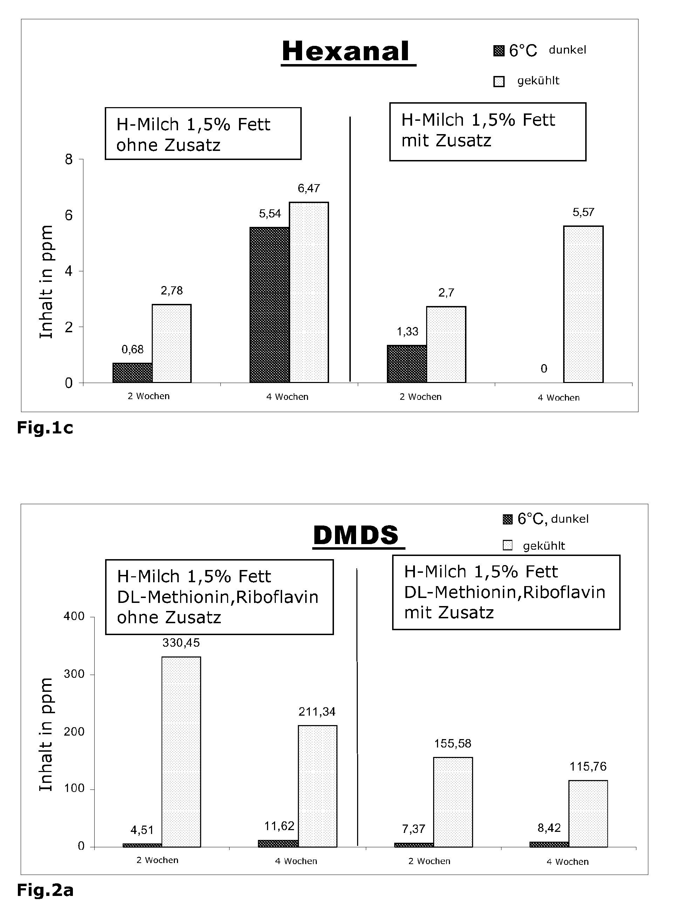

Figur 1a zeigt die entsprechenden Ergebnisse für Dimethyldisulfid, Figur 1b für Dimethyltrisulfid und Figur 1c für Hexanal.

Es zeigt sich, dass der Zusatz von Grüntee-Extrakt starke Einflüsse im Hinblick auf die Bildung von Dimethyltrisulfid und Hexanal hat und sich verzögernd auf die Bildung von Dimethyldisulfid auswirkt.

### Beispiel 3

In einem zweiten Experiment wurden der Milch zusätzlich 1,8 mg/l Riboflavin und 900 mg/l D,L-Methionin zugesetzt, d.h. damit wurden die Mengen, die typischerweise in Milch vorkommen, verdoppelt. Anschließend erfolgte eine Behandlung wie im Beispiel 1 beschrieben.

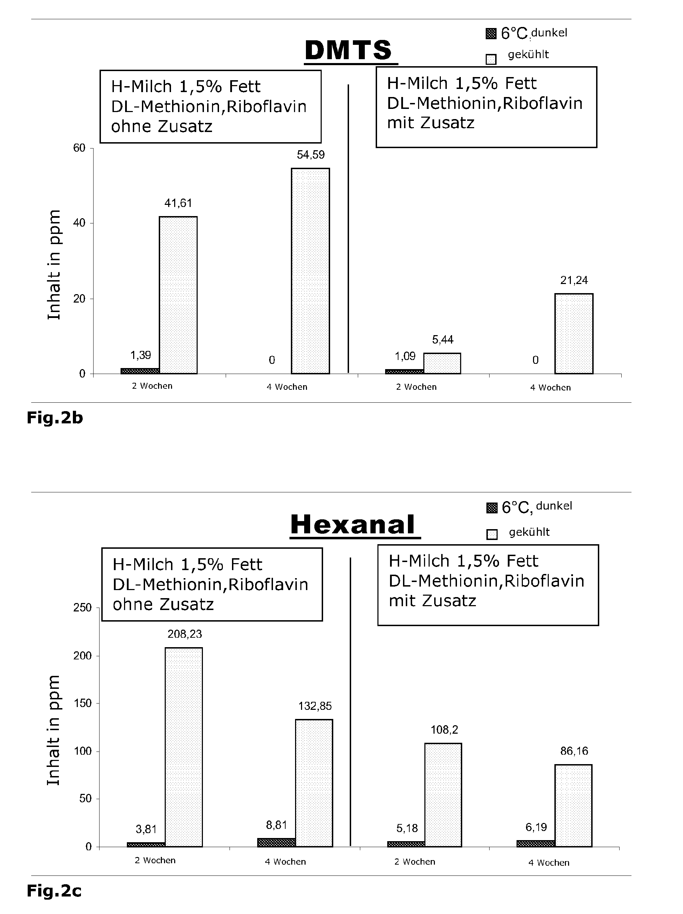

Figuren 2a bis 2c zeigen die dann gefundenen Werte für Dimethyldisulfid, Dimethyltrisulfid und Hexanal. Es werden im unbehandelten Extrakt sehr viel größere Mengen gebildet. Wiederum zeigt sich die positive Wirkung des Grüntee-Extraktes.

## Patentansprüche

1. Verwendung von Grünteezubereitungen zum Schutz von Nahrungsmitteln vor lichtbedingten, photooxidativen oder oxidativen Geschmacksfehlnoten, Geruchsfehlern und/oder Farbfehlern.

2. Verwendung nach Anspruch 1, **dadurch gekennzeichnet, dass** das Nahrungsmittel ausgewählt ist aus milchbasierten, vorzugsweise nicht-festen Produkten und bier- oder malzbasierten Produkten.

3. Verwendung nach Anspruch 2, **dadurch gekennzeichnet, dass** es sich bei dem milchbasierten Produkt um ein Milchgetränk, einen Joghurt, einen Quark, einen Schmierkäse, einen Brotaufstrich, ein Joghurt- oder Quarkgetränk, Buttermilch oder Buttermilchgetränke, Süß- bzw. Sauermolkegetränke, Getränke mit Milch- bzw. Molkeprotein oder Getränke mit Molkenpermeat oder Milchserum und/oder milchpulverbasierte Getränke handelt.

4. Verwendung nach mindestens einem der Ansprüche 1 bis 3, **dadurch gekennzeichnet, dass** es sich bei der Grünteezubereitung um einen Grünteeextrakt, einen Grünteearomaextrakt oder ein Grünteepolyphenolpräparat handelt.

5. Milchhaltiges Produkt, enthaltend mindestens eine Grünteezubereitung.

6. Milchhaltiges Produkt nach Anspruch 5, **dadurch gekennzeichnet, dass** es sich bei der Grünteezubereitung um einen Grünteeextrakt, einen Grünteearomaextrakt oder ein Grünteepolyphenolpräparat handelt.

7. Milchhaltiges Produkt nach Anspruch 5 oder 6, **dadurch gekennzeichnet, dass** es sich um ein Milchgetränk, einen Joghurt, einen Quark, einen Schmierkäse, einen Brotaufstrich, ein Joghurt- oder Quarkgetränk, Buttermilch oder Buttermilchgetränke, Süß- bzw. Sauermolkegetränke, Getränke mit Milch- bzw. Molkeprotein oder Getränke mit Molkenpermeat oder Milchserum und/oder milchpulverbasierte Getränke handelt.

8. Milchhaltiges Produkt nach mindestens einem der Ansprüche 5 bis 7, **dadurch gekennzeichnet, dass** der Gehalt an Grünteezubereitung 0,1 bis 5 g/L bezogen auf das Trockengewicht der Getränkezubereitung beträgt.

9. Milchhaltiges Produkt nach mindestens einem der Ansprüche 5 bis 8, **dadurch gekennzeichnet, dass** zusätzlich ein oder mehrere weitere Inhaltsstoffe wie Tocopherole, Ascorbinsäure, Polyphenole und Pflanzenextrakte enthalten sind.

10. Bier- oder malzbasiertes Getränk, enthaltend mindestens eine Grünteezubereitung.

11. Bier- oder malzbasiertes Getränk nach Anspruch 10, **dadurch gekennzeichnet, dass** es sich bei der Grünteezubereitung um einen Grünteeextrakt, einen Grünteearomaextrakt oder ein Grünteepolyphenolpräparat handelt.

12. Bier- oder malzbasiertes Getränk nach mindestens einem der Ansprüche 10 bis 11, **dadurch gekennzeichnet, dass** der Gehalt an Grünteezubereitung 0,1 bis 5 g/L bezogen auf das Trockengewicht der Getränkezubereitung beträgt.

13. Bier- oder malzbasiertes Getränk nach mindestens einem der Ansprüche 10 bis 12, **dadurch gekennzeichnet, dass** zusätzlich ein oder mehr weitere Inhaltsstoffe wie Tocopherole, Ascorbinsäure, Polyphenole und Pflanzenextrakte enthalten sind.
